Europäisches Patentamt

European Patent Office

Office européen des brevets

(19)

(11) **EP 0 701 047 B1**

(12) **EUROPÄISCHE PATENTSCHRIFT**

(45) Veröffentlichungstag und Bekanntmachung des Hinweises auf die Patenterteilung:
**15.10.1997  Patentblatt 1997/42**

(51) Int Cl.⁶: **F02B 19/12**, F02B 21/00

(21) Anmeldenummer: **94115254.8**

(22) Anmeldetag: **28.09.1994**

(54) **VORKAMMERZYLINDERKOPF MIT GESTEUERTEM LUFTSPEICHER UND GEMISCHDOSIER- UND VERDAMPFUNGSZELLE**

PRECOMBUSTION CHAMBER CYLINDERHEAD WITH CONTROLLED AIR CELL AND MIXTURE METERING AND VAPORIZING CELL

CULASSE DE CYLINDRE DE TYPE A PRECHAMBRE ET A RESERVOIR D'AIR COMMANDE ET CHAMBRE DE DOSAGE ET DE VAPORISATION DE MELANGE

(84) Benannte Vertragsstaaten:
**AT CH DE ES FR GB LI SE**

(30) Priorität: **15.10.1993  IT  BZ930046**

(43) Veröffentlichungstag der Anmeldung:
**13.03.1996  Patentblatt 1996/11**

(73) Patentinhaber: **Sardelli, Antonio**
**39043 Chiusa-Klausen (IT)**

(72) Erfinder: **Sardelli, Antonio**
**39043 Chiusa-Klausen (IT)**

(56) Entgegenhaltungen:
**DE-A- 2 714 090**          **FR-A- 2 188 681**
**US-A- 1 621 936**          **US-A- 3 895 614**

**Beschreibung**

Die Erfindung betrifft einen Zylinderkopf für endothermische Motoren, bei dem die herangezogene Lösung eine Verbrennung mit einem Mindestmaß an verunreinigenden sich daraus ergebenden Produkten und mit einem höheren Wirkungsgrad bei Teillasten, der ohne weitere Abänderung der verwendeten Motoren zu erfordern diese an und für sich weniger umweltverunreinigend gestaltet (siehe DE-A-2 227 440).

Zur Zeit erfolgt die Herabsetzung der luftverunreinigenden Emissionen nach dem Ausstoß der erschöpften Gase, wobei heutzutage aus seltenen Metallen bestehende Katalysatoren verwendet werden. Gezwungenerweise werden keine verbleiten Kraftstoffe verwendet. Das korrekte Verhältnis Luft/Kraftstoff wird notwendigerweise überwacht, um unersetzliche Schäden am empfindlichen System für das Katalisationsverfahren zu vermeiden. Es laufen jedoch ständig Versuche, um an sich weniger verunreinigende Verbrennungen zu erhalten. Die Lösung, bei Motoren mit gesteuerter Zündung mit einer Vorkammer zu arbeiten, wurde von amerikanischen Forschern wie Breisacher & Co. experimentiert, die auch wenn mit verschiedenen Funktionsgrenzen interessante Ergebnisse erzielten. Es folgte die Honda Research Co., in dem im Jahre 1971 das Modell Civic CVCC mit einem Hubraum von 1954 $cm^3$ hergestellt wurde, um die ersten strengen Verordnungen gegen die Luftverschmutzung des Staates Kalifornien einzuhalten. Kurz gefaßt war es ein Suchen nach einer Verbrennung von armen Gemischen, die sogenannten Lean Burn. Die Ausführung bestand in der Methode, ein fettes Gemisch in die Vorkammer anzusaugen, mit der Aufgabe ein heftiges Aufflammen am armen, in die Zylinderkammer angesaugten Gemisch zur Fortpflanzung zu bringen. Bei Überprüfung vor allem der Emissionsdiagramme, wurde klargestellt, daß diese Lösung verschiedene Gegenanzeigen aufwies, die tatsächlich die Einhaltung der strengen gesetzlichen Grenzen behinderten.

Um die dieser Lösung anhaftenden Mängel mit einem anderen Lösungweg für dieses Problem und mit neuerungsgemäßen Lösungen zu beseitigen, liegt die Aufgabe der im Anspruch 1 beanspruchten Erfindung darin, die Bedingungen zu schaffen, um die oben angegebenen Mängel zu beseitigen, wobei die verschiedenen, mit der Verbrennung in den endothermischen Motoren verbundenen Probleme gelöst werden, insbesondere jene, die mit der gesteuerten Zündung und der Einstellung der Last pro Menge verbunden sind. Bei Verwendung eines derartigen Zylinderkopfes können die folgenden wichtigen Ergebnisse erzielt werden:

Herabsetzung der Bildung von NO/$NO_x$, höhere Vollständigkeit in der Reaktion CO/$CO_2$, Entfernung der Emissionsursachen des HC.

Die Vorteile, die sich durch die vorliegende Erfindung ergeben, übersteigen im großen Maß das bloße Wesen der Verbesserung der verunreinigenden Emissionen in der Qualität. Dadurch, daß das bei Teillasten angesaugte Mittel nicht gedrosselt wird, erhält man einen organischen Nutzen in der Betriebsweise des Motors, was als Reflex im Stadtverkehr des Fahrzeuges eine erhebliche Herabsetzung des energetischen Verbrauchs mit sich bringt.

Überdies, und dies von nicht kleinerer Bedeutung, erhält die Möglichkeit, verschiedene Qualitäten von Kraftstoffen ohne an den Motoren Änderungen vorzunehmen, zu verwenden, eine besondere Bedeutung in Anbetracht einer allmählichen Verringerung der Weltvorräte von Kohlenwasserstoffen, indem die Verwendung von alternativen Kraftstoffen stimuliert wird.

Man erzielt auch Vorteile wirtschaftlichen Charakters, da durch die Herabsetzung des Verbrauchs die Energiekosten und die Herstellungskosten herabgesetzt werden, die durch die überfeinerten Systeme zur Überwachung der verschiedenen Parameter, Dreiwegkatalysatoren und die Schutzvorkehrungen für deren Überhitzung, die Lambdasonden dargestellt werden. Diese Überfeinerungen erhöhen überdies die Betriebskosten durch die kurze Lebensdauer des Auspuffs und den Aufwand der erforderlichen Kontrollen.

Kurze Zusammenfassung der Änderung gegenüber den herkömmlichen Motoren:

a) In den Zylinder wird reine Luft mit konstantem Volumen angesaugt.

b) Ein Grundgemisch speist durch einen Hilfsdruck die Verdampfungs- und Dosierzelle der Ladung.

c) Die Luftspeicherkammer ist gesteuert mit einer Brennvorkammer in Serie bzw. parallel geschalten.

Anhand der beigelegten Zeichnungen, in denen aus Übersichts- und Einfachheitsgründen Einzelheiten der allgemeinen Mechanik nicht dargstellt sind, wird die Erfindung und der Lösungsweg zu deren Ausführung beschrieben. Die Werte der physikalischen Zustände, der Zeiten und der Temperaturen sind beispielsweise und bedeuten daher keine Grenzen, die an die Ausführung der Erfindung gesetzt werden.

Figur 1

Das Verfahren beginnt mit der Schließung des Auslaßventiles 1, das die Öffnungsbewegung des Ansaugventiles 2 überschneidet, dessen Leitung 3 mit außen in Verbindung steht und am anderen Ende in die dem Zylinder 4 angehörende Kammer 4 mündet. Während der Kolben 5 den Einlaßhub beginnt, ist die allgemeine Situation die folgende: Das Überströmventil 6, das die Verbindung der Vorkammer 8 mit der Dosierzelle 7 ermöglicht, ist geschlossen. Das geöffnete Ventil 9 verbindet die Grundgemischleitung 10 mit der Zelle 7. Dieses Gemisch, dessen Druck beispielsweise 2 bar absolut ist, neigt dazu, die Zelle 7 zu versetzen, das, getrennt durch das Zwischenstück 11, von der Vorkammer Wärme erhält und verdampft. Bei der Schließung des Auslaßventils 1 wird das Ventil 9 geschlossen sein, wobei die Verbindung zwischen der Leitung 10 und der Zelle 7 unterbrochen ist. In einer schnellen Reihenfolge wird dann das Überströmventil 6 geöffnet, wobei die Verbindung der Zelle 7 mit der Vorkammer 8 erlaubt wird. Während des Einlaßhubes ist in der Leitung 3 keine Klappe vorhanden und der Druck innerhalb des Zylinders 4 und der Vorkammer 8 ist in etwa der Außendruck, der mit einem Druck von 1 bar angenommen wird. Angenommen, daß die Zelle 7 mit dem Grundgemisch bei einem Druck von 2 bar gefüllt wurde, wobei die Zelle ein gegenüber Vorkammer 8 gleiches oder niedrigeres Volumen aufweist, und die Verbindung zwischen den beiden Räumen offen ist, wird mit der Anpassung der Drücke 50% des in der Zelle 7 enthaltenen Gemisches in die Vorkammer 8 übergeströmt sein. Hat der Kolben 5 den unteren Totpunkt erreicht, wird die Ansaugung bzw. Einfüllung beendet und es werden die Ventile 2 und 6 geschlossen. In rascher Reihenfolge wird dann das Ventil 9 geöffnet und der Kolben 5 beginnt für den Verdichtungshub wieder aufzusteigen. Am Kopf Zylinder befindet sich außer den Ventilsitzen 1 und 2 der Verbindungskanal 12 zwischen der Kammer 4 und der Vorkammer 8 sowie die Eingangsöffnung 13 zur Speicherkammer 14. Diese letztere besitzt im Inneren einen Verschluß 15 zum Verschließen der Eingangsöffnung 13. Der Verschluß ist durch den Abdeckmantel 16 vervollständigt, der beim Schließen des Verbindungsschlitzes 17 zwischen der Speicherkammer 14 und der Vorkammer 8 bestimmt ist. Die Eingangsöffnung 13 ist geöffnet und der Schlitz 17 ist geschlossen. Ist der Kolben 5 am oberen Totpunkt angelangt, so ist das verdichtete Mittel in zweckmäßigen Proportionen zwischen der Kammer 4, dem Speicher 14 und der Vorkammer 8 aufgeteilt. In dieser letzteren hat die eingetretene Luft das Grundgemisch verdünnt, das dort von der Zelle 7 überströmte. In diesem Augenblick ist die Situation die folgende: Die Kammer 4 und der Speicher 14 sind mit verdichteter Luft gefüllt, die Vorkammer 8 ist mit gemäß dem Lastgrad des Grundgemisches verdünnten Gemisch gefüllt. Die Summe der drei Volumina legt das globale Verdichtungsverhältnis fest. Das Volumen der Vorkammer addiert sich zu jenem angesaugten. Immer aufgrund einer Annahme wird am oberen Totpunkt der Funken gezündet, der das Gemisch in der Vorkammer zum Zünden bringen wird. Der erzeugte Druck wird über den Kanal 12 in die Kammer 4 und in den Speicher 14 fortgepflanzt. Wird eine plötzliche Verbrennung angenommen, so wird in etwa zum oberen Totpunkt seitens des Verschlusses 15 das Schließen der Eintrittsöffnung 13 und die Öffnung des Schlitzes 17 derart gesteuert, daß über die Vorkammer 8 die Verbindung zwischen dem Speicher 14 und der Kammer 4 hergestellt wird. Während der Expansion mit dem in Richtung des unteren Totpunktes bewegten Kolben, expandiert die im Speicher enthaltene Luft in Richtung der Vorkammer mit zwei Wirkungen: Der Inhalt der Vorkammer 8 wird in Richtung der Kammer 4 gedrückt und nimmt an der Oxidation der in ihm enthaltenen Zwischenprodukte teil. In der Endphase ermöglicht die überschüssige Luft des Speichers einer Spülung der Vorkammer, wobei Kohlenstoffreste daran gehindert werden, an den Wandungen anzuhaften (die sogenannte Alterung). Am Ende der Expansion am unteren Totpunkt, wird in herkömmlicher Weise das Ventil 1 geöffnet, d.h. es beginnt somit ein spontaner Ausstoß der verbrannten Stoffe, dem ein zwangsweiser Ausstoß folgt. Während des Aufstieges des Kolbens wird der Schlitz 17 geschlossen und der Verschluß 15 öffnet die Verbindungsöffnung 13, wodurch die unmittelbare Verbindung wieder hergestellt wird. Am oberen Totpunkt wird das dargestellte Verfahren abgeschlossen und es beginnt ein neues.

Das durch die Leitungen 10 geführte Grundgemisch wird in der Anordnung 24 gebildet, indem die folgende Methode verfolgt wird: Die Verdrängerpumpe mit veränderbarer Durchflußmenge 18 ist im Gleichlauf mit dem Motor verbunden, und hat die Aufgabe den für den Betrieb des Motors erforderlichen flüssigen Brennstoff zu dosieren und mäßig zu verdichten. Ihre Fördermenge kann zwischen 0 und ein Maximum veränderlich sein, das mit dem in den Zylindern angesaugten konstanten Luftvolumen in Beziehung steht. Es wird ein maximales Gewichtsverhältnis von 18:1 angenommen. Das Mittel wird durch die Leitung 19 der Sprühdüse 20 zugeführt, die mit einem durch eine Feder 21 belasteten Halteventil versehen ist. Die Sprühdüse wird durch eine Leitung 22 umgeben, die mit Druck den von dem der Energiequelle anliegenden Speicher 23 ankommenden gasförmigen Stoff führt, wobei in diesem Fall die Wärmequelle durch das Auspuffrohr 25 dargestellt ist. Im dargestellten Fall ist das Mittel Abgas, das nach Bildung des Grundgemisches, mit seinem Druck ins Innere des Raumes 24 fließt, und das drei hauptsächliche Funktionen erfüllt:

1) Dadurch, daß der Raum anliegend zum Auslaßsammler 25 liegt, gewährleistet er mittels eines wärmeeinstellbaren Systems dem Gemisch eine Temperatur von etwa 573° K (300° C), die die Verdampfung mindestens von 50/70% des naphtenischen Inhalts des ausgewählten Kraftstoffes sicherstellt.

2) Als Speicher und zur Erhöhung der Verdampfzeit.

3) Mit der Funktion als Verteiler in Mehrfachzylindermotoren.

Das unter Druck stehende Abgas wird durch das Zusatzventil 26 entnommen, das durch dieselbe Nocke gesteuert wird, die das Auslaßventil 1 über die Bohrung 27 betätigt. Über die mit einem Rückschlagventil 28 versehene Bohrung wird der Speicher 23 mit dem gewünschten Druck gefüllt.

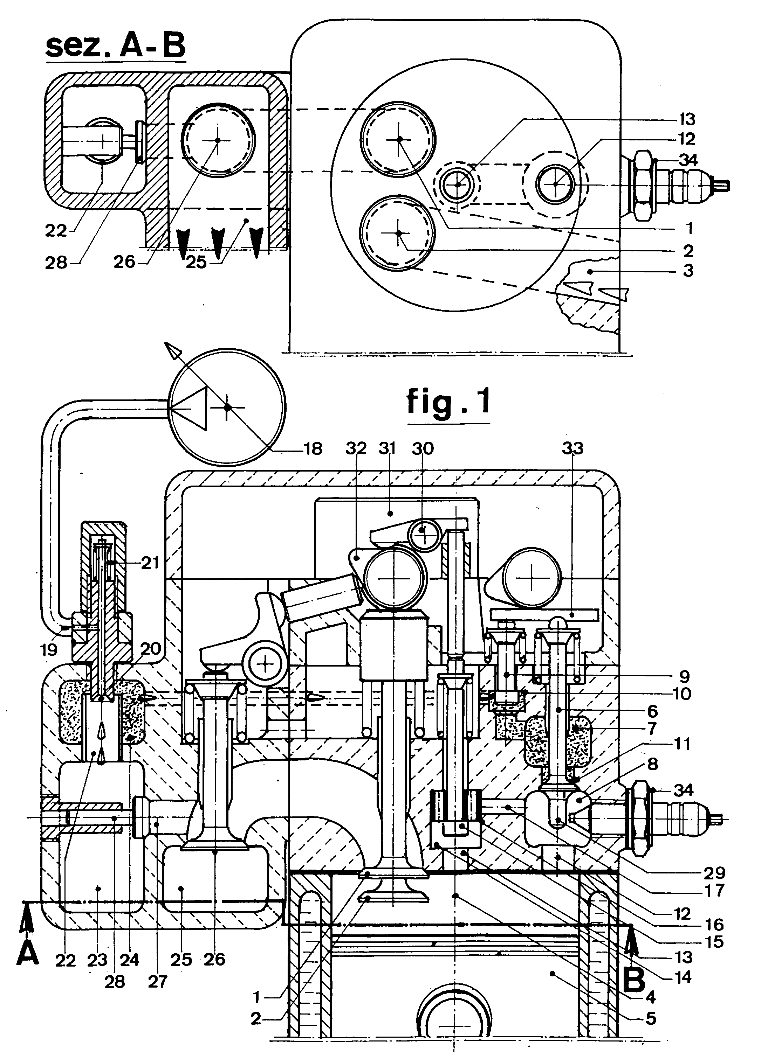

Wie schon erwähnt, wird in der Endphase das Grundgemisch in der Zelle 7 dosiert, wo es tangential (Figur 1) eintritt, indem es um das Ventil 6 herum eine Umlaufbewegung ausführt, wobei diese Bewegung durch Trägheit auch an der Öffnung des Ventils und folglich im Inneren der Vorkammer 8 erhalten bleibt. Das während der Verdichtung eintretende Verdünnungsmittel weist eine zur Bewegung des Grundgemisches senkrechte Bewegung auf, die durch die besondere Ausbildung des Schaftes 29 (Figur 1) eine torusförmige Bewegung annimmt und dessen vielfältige Wirbel insbesonders dazu geeignet sind, die Flamme innerhalb der Vorkammer 8 rasch fortzupflanzen.

Diese Eigentümlichkeit erlaubt die Einbringung der Höchstlast auch bei besonders niedrigen Drehzahlen, bei denen der nicht durch den durch den Überschuß von Luft beeinflußten niedrigen volumetrischen Wirkungsgrad, höhere Wirkungsgrad eine praktisch flache Antriebsmomentkurve zwischen den mittleren und den tiefen Drehzahlen erlaubt, wobei folglich die gänzliche Ausbeute des Motors, insbesondere bei Beschleunigung und im Stadtbereich begünstigt wird.

Die Zusammensetzung des Grundgemisches ändert sich zwischen 1:4 und 1:0,75, wobei die Herabsetzung der Schadstoffe dadurch erklärt wird, in dem die drei Verwendungsbedingungen untersucht werden, wenn in der Vorkammer am Ende des Verdichtungshubes am oberen Totpunkt das Verhältnis Luft/Kraftstoff folgendes ist:

1. höher 2. gleich 3. niedriger als das stöchiometrische Verhältnis. Im ersten Fall ist die Höchstgrenze gegeben durch das Grundgemisch 1:4 und entspricht der niedrigsten Drehzahl des Motors, wobei unter diesen Bedingungen die Verdünnung das Verhältnis a/c zu 1: 34,4 führt, wobei die Zündung 35° vor den oberen Totpunkt vorverlegt ist, sodaß das Verhältnis auf 1:16,3 sinkt, d.h. zündbar wird. Das Gesamtverhältnis ist 1:110 und die Höchsttemperatur der Verbrennung wird ungefähr 953°K (680° C) sein. Es ist klar, daß die Verbrennung technisch in etwa am oberen Totpunkt abgeschlossen wird. Die Gleichförmigkeit und der Überschuß an Sauerstoff gewährleisten die Oxidation, während die verkleinerten Wandungen der Vorkammer und deren Spülung die unverbrannten Stoffe vermeiden. Die niedrige Verbrennungstemperatur macht die eventuelle Bildung der NO und $NO_x$ unbedeutend.

Im zweiten Fall, bringt die Verdünnung zu einem Verhältnis zu 1:14,7, d.h. stöchiometrisch, wobei die Zündung um 15° vor dem oberen Totpunkt vorgezogen wird, sodaß ein Verhältnis von 1:11,5 erhalten wird, d. h. jenes der höchsten Flammgeschwindigkeit, das zusammen mit dem kleinen Volumen der Vorkammer (mit einem Verhältnis von 1:4 gegenüber einer scheibenförmigen Fortpflanzung im Zylinder) und mit einem in der Mitte der Vorkammer gezündeten Funken die Bedingung schafft, eine im wesentlichen mit konstantem Volumen sich entwickelnde Verbrennung zu haben. Es ist schwierig, sich günstigere Bedingungen vorstellen zu können. Im dargelegten Fall liegt die Höchsttemperatur bei etwa 1360°K (1087°C). Das Gesamtverhältnis Luft/ Kraftstoff a/c ist bei 1:48, wobei folglich für die Schadstoffe dieselben wie oben angestellten Betrachtungen gelten. Ausgehend vom zweiten Fall, ist das Verhältnis a/c in der Vorkammer am oberen Totpunkt immer unstöchiometrisch. Es liegt das Minimum vor, sobald die der höchsten volumetrischen Fördermenge der Kraftstoffpumpe entsprechende Ladung eingeführt wird, jedoch, wie bewiesen, wird die Höchsttemperatur am oberen Totpunkt nahezu konstant sein, auch wenn der Brennstoff in der Vorkammer erhöht wird, dadurch, daß die in sie eingeführte oxidierende Reaktionsmenge konstant ist. Folglich muß bei Erwägung, daß die theoretisch verwendbaren Wärmemengen verborgen sind, die Gleichung, die die von einem Kg des Gemisches Luft + Brennstoff entwickelte Wärme berechnet, abgeändert werden.

$$\frac{KJ/Kg}{a+c} = KJ \qquad \text{wird:} \quad \frac{KJ/Kg}{a+c} \cdot \frac{(a/c \ pre)}{a/c \ ste} = cost. \ KJ$$

wo (a/c pre) = Verhältnis Vorkammer (a/c ste) = stöchiometrisch.

Es ist in Betracht zu ziehen, daß gegenüber dem Dieselverfahren, bei dem die eingeführte Wärme nach dem oberen Totpunkt dadurch erfolgt, daß Brennstoff eingespritzt wird, der im kurzen zur Verfügung stehenden Zeitabschnitt zerstäubt, verdampft, heterogen vermischt, und danach verbrannt werden muß, der Fall des fetten Gemisches schon im Inneren das Gemisch verschieden ist, das vor dem oberen Totpunkt Umsetzungen erfahren hat, da der Mangel an Sauerstoff die Entstehung von Radikalen und das molekulare Kracken begünstigt, endothermische Prozesse, die die Erhöhung des Druckes vor dem oberen Totpunkt behindert haben, um diesen Druck bei der Einführung des Oxydationsmittels mit derselben Beschleunigung zu begünstigen, was: r(sen a + L sen a cos a) die absteigende Bewegung des Kolbens kennzeichnet.

Unter diesen Bedingungen und nach Einbringung der höchsten Last wird praktisch eine Verbrennung mit konstantem Druck, die theoretische im gemischten Verfahren von Sabathè ausgeführt. Wenn auch die Reaktion bis zum oberen Totpunkt vollständig als exothermisch angesehen wird, hätte die Temperatur 1368°K (1095°C) erreicht und der Druck ungefähr 33 bar, was 30° nach dem oberen Totpunkt ungefähr 30 bar mit einer Temperatur um 2100°K (1827°C) wäre, d.h. unterhalb dem Mittelwert der Dissoziation der Kohlenwasserstoffe, während die $N_2$ verwickelnde Reaktion sowohl von der niedrigeren Verbrenntemperatur als auch dadurch verhindert wird, daß der Angriff des Sauerstoffs gegenüber den Kohlenwasserstoffen (HC) absolut vorrangig ist.

**Patentansprüche**

1. Zylinderkopf mit einer Brennvorkammer (8) und einem Luftspeicher (14) für endothermische Motoren, bei denen das das Verdichtungsverhältnis festlegende Volumen mit angemessenem Ausmaß aufgeteilt ist zwischen der Brennvorkammer (8), einer Kammer (4) zur Vervollständigung der Oxidation und der Kammer (14),wobei diese Kammer (14) dient zur Speicherung der zur Vervollständigung in der Vorkammer (8) erforderlichen Luft , wobei die Luft aus der Kammer (14) auch dazu dient die Gase auszustoßen, wobei die Vorkammer (8) einen Kanal (12) aufweist zur ständigen Verbindung mit der Kammer (4) und taktweise über einen Schlitz (17) mit dem Luftspeicher (14) in Verbindung gesetzt werden kann, wobei im Raum dieses Speichers ein Verschluß (15) wechselweise den Schlitz (17) und eine zur Herstellung einer Verbindung zur Kammer (4) dienenden Bohrung (13) versperrt, wobei die Vorkammer (8) mittels einer mit einer Bohrung (11) versehenen Trennwand von einer Dosier-Verdampfungszelle (7) getrennt ist, wobei das die Bohrung (11) verschließende Ventil (6) die gesteuerte Verbindung zwischen der Vorkammer (8) und der Dosierzelle (7) erlaubt, wobei die Zelle taktweise mit einem Brenngasmittel gespeist wird, das unter Druck durch eine Leitung (10) gespeist wird, die von einem Ventil (9) überwacht wird, das gesteuert die Verbindung zwischen der Leitung (10) und der Dosierzelle (7) herstellt, wobei das mit mäßigem Druck von der Leitung (10) herkommende Brennmittel, ein Träger für flüssige mit demselben zerstäubte Kohlewasserstoffe ist und wobei dieses Gas seinerseits Brenneigenschaften aufweisen kann, wie z.B. das Methan im gasförmigen Zustand, wobei diese von der Leitung (10) herkommende Zusammensetzung außerhalb des Zylinderkopfs mittels einer am Auslaßsammler (25) anliegenden Vorrichtung (24) gebildet wird, wo zusammen mit einem mäßigen Druck das Gas und der von der Pumpe (18) mit veränderliche Menge gelieferte Brennstoff eingeleitet werden, wodurch die Bedingungen für die Dosierung und die Verdampfung auf hoher Temperatur eines verschieden zusammengesetzten Brenngemisches, des sogenannten Grundgemisches, entsteht, das mit einem eigenen und unabhängigen Druck in die Vorkammer (8) überströmt, wobei bei der Anwendung des Zylinderkopfs an einem laufenden Motor es im Verdichtungshub durch das nicht gedrosselte und nicht vergaste, innerhalb des Zylinders angesaugte Mittel verdünnt wird, wobei nach dem Anfang der Verbrennung und im Expansionshub die im Speicher (14) verdichtete Luft in Richtung der Vorkammer (8) umgelenkt wird, um in die Kammer (4) Zwischenprodukte und unverbrannte Produkte zu drücken, dadurch gekennzeichnet, daß die Dosier-Verdampfungseinrichtung (24), die Dosier - Verdampfungszelle (7), der gesteuerte Luftspeicher (14) mit wechselndem Verschluß (15) und Verbindungsschlitz (17) zusammenwirken, um eine Verbrennung zu erreichen, in der die Emissionsursachen von Schadstoffen weitestgehend beseitigt und infolge dessen ein höherer thermischer und mechanischer Wirkungsgrad erreicht werden, wobei die Zwischenprodukte und unverbrannten Produkte wirksam mit dem Inhalt der Kammer bei der Vervollständigung ihrer exothermischen Oxidationsreaktion im Abschluß eines Taktes zusammenwirken, der unter Überwachung der Temperatur und des Druckes die nicht überwachte Bildung von NO und $NO_x$ verhindert hat.

2. Zylinderkopf für endothermische Motoren nach Anspruch 1, dadurch gekennzeichnet, daß ein bei hoher Temperatur in der Vorrichtung (24) gebildetes und nachfolgend innerhalb der Dosierzelle (7) gespeichertes Grundgemisch, an deren Trennwand zusammen mit dem Ventil (6) die von der Vorkammer (8) abgegebene Wärme aufnimmt und so die Möglichkeit gibt, Kraftstoffe mit höheren spezifischem Gewicht, zusammengesetzt mit Benzinen, Naphtenen, Alkoholen zu verwenden, deren Gasträger Abgas, Luft, Methan usw. wie auch verschiedene Gemische dieser Gase sein kann.

3. Zylinderkopf für endothermische Motoren nach Anspruch 1, dadurch gekennzeichnet, daß das Brennmittel im Speicher (14) während der Expansion ins Innere der Vorkammer (8) proportional zur Absenkgeschwindigkeit des Kolbens überströmt, wobei folglich durch Festlegung der Volumensabmessungen der Kammer mit der Höchstlast im wesentlichen der durch Sabathè theoretisch festgelegte gemischte Takt ausgeführt wird.

4. Zylinderkopf für endothermische Motoren nach Anspruch 1, dadurch gekennzeichnet, daß auch bei Höchstlasten und bei vor dem oberen Totpunkt gezündeten Mischungen, sobald der Kolben dieses Niveau erreicht, vorbestimmte Drücke und Temperaturen in der Vorkammer nicht überschritten werden, zufolge des Mangels des Oxidierungsmittels.

5. Zylinderkopf für endothermische Motoren nach Anspruch 1, dadurch gekennzeichnet, daß der gesamte Luftüberschuß, der die technisch komplette Verbrennung ermöglicht, auch nicht bei Mindestlasten das Grundgemisch über das stöchiometrische Niveau bis zu 45° vor dem oberen Totpunkt verdünnt, wobei somit in einem Höchstmaß die Bildung von die Detonation verursachenden Peroxyden begrenzt wird.

6. Zylinderkopf für endothermische Motoren nach Anspruch 1 bis 5, dadurch gekennzeichnet, daß ein Schaft (29) am Ende des Ventils (6) außer für die Funktion, die Flüssigkeitsströme zuzuführen, auch als bewegliche Kathode für die Zündkerze veränderlicher Position (34) verwendet wird.

7. Zylinderkopf für endothermische Motoren nach Anspruch 1 bis 6, dadurch gekennzeichnet, daß die Nocke des Auslaßventiles (1) auch das Ventil (15) mittels des Kipphebels (30) steuert, der an einem Lager (31) angelenkt ist, das die Nockenwelle (32) der Ventile abstützt.

8. Zylinderkopf für endothermische Motoren nach Anspruch 1 bis 7, dadurch gekennzeichnet, daß der einzige Kipphebel (33) in Reihenfolge beide Ventile (6) und (7) steuert, die den Strom des Grundgemisches in Richtung der Vorkammer (8) steuern.

9. Zylinderkopf für endothermische Motoren nach einem der vorstehenden Ansprüche, dadurch gekennzeichnet, daß das im Speicher (23) unter niederem Druck enthaltene Mittel durch den Auslaß eines Zylinders mittels eines Zusatzventils (26) entnommen wird, das von derselben Nocke betätigt wird, das das Hauptauslaßventil (1) steuert.

## Claims

1. A head for an endothermic engine in which the volume establishing the compression ratio is divided, following appropriate sizes, between a combustion prechamber (8), a chamber for completion of oxidation (4) and a chamber (14) intended for storing or accumulating the air required for completing the reaction in prechamber (8) and ejecting gases, prechamber (8) being in permanent communication with chamber (4) via a channel (12), while it is capable of cyclically communicating through a slit (17) with the air accumulator (14), due to the fact that in the hollow space of said accumulator a shutoff valve (15) alternately closes slit (17) and hole (13) establishing communication with chamber (4); in addition, prechamber (8) is separated from the metering-evaporation cell (7) by means of a perforated partition (11), valve (6) closing hole (11) drivingly enables communication between the prechamber (8) and metering cell (7), said cell is cyclically supplied with gaseous fuel under pressure from duct (10) controlled by valve (9) that drivingly establishes continuity between the duct (10) and metering cell (7); fuel under moderate pressure from duct (10) entrains atomized liquid hydrocarbons with it and this gaseous fluid in turn can have combustible properties, such as methane in a gaseous state for example, this possible composition coming from duct (10) is formed at the exterior of the cylinder head by device (24) close to the exhaust manifold (25) into which, under moderate pressure, the gaseous fluid and liquid fuel delivered from the variable flow pump (18) are jointly introduced, and carries into effect the condition adapted to meter and evaporate, at a high temperature, a differently composed combustible mixture called Master mixture which, being transferred under its own independent pressure to prechamber (8), will be diluted during compression by the fluid not submitted to chocking and not carburized, sucked into the cylinder; after beginning of combustion and during expansion, the compressed air into the accumulator (14) will be diverted to prechamber (8) to push intermediate and unburnt products towards chamber (4);
characterized in that: the device (24), the metering/evaporation chamber (7), the piloted accumulator (14) provided with shutoff valve (15) and the communication slit (17) act jointly, so as to obtain a combustion originally eliminating causes giving rise to formation of pollutant composite products and consequently achieving higher thermal and mechanical yields and where intermediate products efficiently take part, with the chamber contents, in their oxidation reaction at the end of a cycle that, by temperature and pressure control, enables uncontrolled formation of NO and Nox to be prevented.

2. A head for an endothermic engine according to claim 1, characterized in that a Master mixture formed at a high temperature in device (24) and after residence in cell (7) the partition of which together with valve (6) transmits heat dissipated by prechamber (8) thereto, offers the possibility of using fuels having a higher specific gravity or the formulation of which contemplates different types combustible as like gasoline,naphthenes, alcohols, the gaseous carrier of which acting as the excipient can be an exhaust gas, air, methane, etc. and also mixtures thereof.

3. A head for an endothermic engine according to claim 1, characterized in that the combustion-supporting fluid in accumulator (14) during expansion undergoes transferring to the inside of prechamber (8) in a manner proportionate to the speed of the piston down-stroke, and consequently, after establishing sizes of the chamber volumes practically at a maximum load, Sabathé's cycle is accomplished.

4. A head for an endothermic engine according to claim 1, characterized in that even at maximum loads, with mixtures ignited before the T.D.C. when piston has reached this level, predetermined pressures and temperatures are not exceeded due to lack of oxidising reactant in the prechamber.

5. A head for an endothermic engine according to claim 1, characterized in that excess of overall air facilitating a technically perfect burning even at minimum loads does not cause dilution of the Master mixture beyond the stoichiometric level until 45° before the T.D.C., which will bring about a maximum restriction in formation of peroxides that are the cause of detonations.

6. A head for an endothermic engine according to claims 1 to 5, characterized in that shank (29) at the valve (6) end, not only performs the function of conveying streams, but it is also used as the moving cathode for the spark plug of variable position (34).

7. A head for an endothermic engine according to claims 1 to 6, characterized in that the cam of the exhaust valve (1) also operates valve (15) by means of a rocker arm (30) pivotally mounted on a support (31) supporting the camshaft (32) operating the valves.

8. A head for an endothermic engine according to claims 1 to 7, characterized in that a single rocker arm (33) operates the sequence of the two valves (6 and 7) adjusting the Master mixture flowing to the prechamber (8).

9. A head for an endothermic engine according to any of the preceding claims, characterized in that the fluid acting as the excipient and held in the accumulator (23) at low pressure is drawn from the exhaust pipe of a cylinder by a further valve (26) driven by the cam operating the main exhaust valve (1).

**Revendications**

1. Culasse pour moteur endothermique dans laquelle le volume établissant le rapport de compression est divisé, suivant des dimensions convenables, entre une préchambre de combustion (8), une chambre pour le complètement de l'oxydation (4) et une chambre (14) destinée à accumuler l'air nécessaire pour compléter la réaction dans la préchambre (8) et éjecter les gaz, la préchambre (8) étant en communication permanente avec la chambre (4) par l'intermédiaire d'un canal (12), alors qu'elle peut communiquer de manière cyclique à travers une fente (17) avec l'accumulateur d'air (14), étant donné que dans l'espace dudit accumulateur la soupape d'isolement (15) bouche alternativement la fente (17) et le trou (13) établissant la communication vers la chambre (4); en outre la préchambre (8) est séparée de la cellule de dosage-évaporation (7) par une cloison perforée (11), la soupape (6) qui bouche le trou (11) permet, sur commande, la communication entre la préchambre (8) et la cellule de dosage (7), ladite cellule est alimentée de manière cyclique en un fluide combustible gazeux sous pression en provenance du conduit (10) contrôlé par la soupape (9) qui, sur commande, établit la continuité entre le conduit (10) et la cellule de dosage (7); le fluide combustible sous pression modérée en provenance du conduit (10) entraîne avec lui les hydrocarbures liquides pulvérisés et ce fluide gazeux peut à son tour avoir des propriétés combustibles, comme par exemple le méthane à l'état de gaz, cette composition possible en provenance du conduit (10) est formée à l'extérieur de la culasse de cylindre par le dispositif (24) à proximité du collecteur d'échappement (25) où sont introduits conjointement, à une pression modérée, le fluide gazeux et le combustible liquide délivré par la pompe à débit variable (18), et réalise la condition pour doser et vaporiser à une température élevée un mélange combustibile diversement composé appelé Mélange mère, lequel étant transvasé par sa propre pression indépendante, dans la préchambre (8), sera dilué pendant la compression par le fluide non soumis à étranglement et non carburé, aspiré à l'intérieur du cylindre; après le début de la combustion et pendant l'expansion, l'air comprimé contenu dans l'accumulateur (14) sera dévié vers la préchambre (8) pour pousser vers la chambre (4) des produits intermédiaires et imbrûlés;
caractérisée en ce que: le dispositif (24), la cellule de dosage/évaporation (7), l'accumulateur piloté (14) pourvu de soupape d'isolement (15) et la fente de communication (17) agissent conjointement pour obtenir une combustion qui à l'origine élimine les causes de formation de produits composés polluants et par conséquent obtient des rendements thermiques et mécaniques plus élevés et où des produits intermédiaires prennent part efficacement, avec le contenu de la chambre, à leur réaction d'oxydation à la conclusion d'un cycle qui par le contrôle de la température et des pressions empêche la formation incontrôlée de NO et NOx.

2. Culasse pour moteur endothermique selon la revendication 1, caractérisée en ce qu'un Mélange mère formé à une température élevée dans le dispositif (24) et après séjour dans la cellule (7) dont la cloison, ensemble avec la soupape (6), lui transmet la chaleur dissipée par la préchambre (8), donne la possibilité d'utiliser des carburants ayant un poids spécifique plus haut ou dont la formulation prévoit des essences, des dérivés de naphtènes, des alcools, dont le véhicule servant d'excipient gazeux peut être un gaz d'échappement, de l'air, du méthane, etc., et également des mélanges de ces gaz.

3. Culasse pour moteur endothermique selon la revendication 1, caractérisée en ce que le fluide comburant dans l'accumulateur (14) pendant l'expansion subit un transvasement à l'intérieur de la préchambre (8) de manière proportionnelle à la vitesse de descente du piston, et par conséquent, après avoir établi les dimensions des volumes des chambres, on réalise pratiquement, à une charge maximum, le cycle théorisé par Sabathé.

4. Culasse pour moteur endothermique selon la revendication 1, caractérisée en ce que même aux charges maximales, avec des mélanges allumés avant le PMS quand le piston a atteint ce niveau, on ne dépasse pas des pressions et températures prédéterminées à cause de la pénurie de réactif oxydant dans la préchambre.

5. Culasse pour moteur endothermique selon la revendication 1, caractérisée en ce que l'excès d'air total facilitant une combustion techniquement parfaite, même aux charges minimales ne dilue pas le mélange mère au-delà du niveau stoechiométrique jusqu'à 45° avant le PMS, ce qui entraîne une limitation maximum dans la formation de peroxydes qui sont la cause de détonations.

6. Culasse pour moteur endothermique selon les revendications 1 à 5, caractérisée en ce que la queue (29) à l'extrémité de la soupape (6), non seulement a pour fonction d'acheminer les filets fluides, mais elle est utilisée en tant que cathode mobile pour la bougie d'allumage de position variable (34).

7. Culasse pour moteur endothermique selon les revendications 1 à 6, caractérisée en ce que la came de la soupape de décharge (1) commande également la soupape (15) par l'intermédiaire du balancier (30) monté à pivotement sur le support (31) supportant l'arbre dex excentriques (32) de commande des soupapes.

8. Culasse pour moteur endothermique selon les revendications 1 à 7, caractérisée en ce que le balancier unique (33) commande la séquence des deux soupapes (6 et 7) réglant l'écoulement du mélange mère vers la préchambre (8).

9. Culasse pour moteur endothermique selon l'une quelconque des revendications précédentes, caractérisée en ce que le fluide servant d'excipient contenu à basse pression dans l'accumulateur (23) est prélevé de l'échappement d'un cylindre par une soupape additionnelle (26) manoeuvrée par la came commandant la soupape de décharge principale (1).

## sez. A-B

## fig . 1